# EUROPÄISCHE PATENTSCHRIFT

(11) **EP 0 601 311 B1**
(45) Veröffentlichungstag und Bekanntmachung des Hinweises auf die Patenterteilung: **30.07.1997**
(21) Anmeldenummer: 93116742.3
(22) Anmeldetag: 16.10.1993
(51) Int. Cl.: C08L 97/00, D04H 1/64

(54) **Bindemittelgemisch**
Binder mixture
Mélange de liants

(30) Priorität: 10.12.1992 DE 4241513
(43) Veröffentlichungstag der Anmeldung: 15.06.1994
(73) Patentinhaber: Bakelite AG, 58642 Iserlohn-Letmathe (DE)
(72) Erfinder: Gardziella, Arno, Dr., D-58454 Witten-Rüdinghausen (DE); Kurple, Ken, Casco, Michigan 48064 (US); Hansen, Achim, Dr., D-58642 Iserlohn (DE); Schröter, Stephan, D-58642 Iserlohn (DE); Roll, Willi, D-48341 Altenberge (DE)

(56) Entgegenhaltungen:
- EP-A- 0 540 836
- US-A- 4 239 666
- US-A- 4 320 036

## Beschreibung

Die Erfindung betrifft ein neues Bindemittel, das insbesondere für die Herstellung von Textilvliesen geeignet ist. Üblicherweise werden hierzu als Bindemittel pulverförmige Phenolharze eingesetzt, die einen einfachen Herstellungsprozeß erlauben.

Die so erhaltenen Textilvliese haben die unangenehme Eigenschaft, daß sie gelegentlich, vor allem nach Einwirkung erhöhter Temperaturen und Feuchtigkeit aminische Zersetzungsprodukte und Formaldehyd emittieren.

Durch Einsatz eines pulverförmigen Gemisches aus nicht wärmereaktivem Phenolharz und einem oder mehreren wärmereaktiven Kondensationsprodukten aus der Gruppe der Phenol-, Amino- oder Epoxidharze als Bindemittel, wie er aus EP-A 0 254 807 bekannt ist, läßt sich der vom Bindemittel stammende Geruch vermeiden.

Dennoch verbleibt eine restliche Formaldehydentwicklung, die von den eingesetzten aus Textilabfällen gewonnenen Fasermaterial stammt. Diese Fasern enthalten als Avivagemittel oft Harnstoff-Formaldehyd-Kondensationsprodukte, die unter den o. g. Bedingungen Formaldehyd abspalten können.

Außerdem sind die Festigkeiten und Verwindungssteifigkeiten der mit diesen Bindemitteln hergestellten Textilvliesformteile geringer als die der mit reinem Phenolharz hergestellten.
Es ist daher Aufgabe der Erfindung, ein Bindemittel oder Bindemittelgemisch bereitzustellen, das zur Herstellung von Textilvliesen nach den üblichen Verfahren geeignet ist, das die vom Einsatz von Phenolharz bekannten Festigkeiten des Vlieses ermöglicht (bei allen Fasermaterialien), das nach Aushärtung keine geruchsbildenden Gase freisetzt und das die Freisetzung von geruchsbildenden Gasen, insbesondere Formaldehyd aus Vivagemitteln reduziert.

Die Lösung der Aufgabe erfolgt durch Bindemittelgemische gemäß der Ansprüche 1 bis 4. Die Bindemittelgemische eignen sich insbesondere zur Herstellung von Textilvlies aber auch von Holzfaserwerkstoffen, wie in den Ansprüchen 5 und 6 beansprucht.

Es wurde gefunden, daß bei thermischer Behandlung von Fasern aus Textilabfällen mit Lignin, das reaktive Isocyanat- oder Epoxidgruppen enthält, die Fasern miteinander verbunden werden und gleichzeitig geruchsbildende Stoffe, insbesondere Formaldehyd gebunden werden. Somit ließe sich solche reaktive Gruppen enthaltendes Lignin als Bindemittel zur Herstellung von Textilvlies einsetzen, wenn die erzielten Festigkeiten ausreichend wären.
Es wurde weiterhin gefunden, daß sich ein Gemisch aus reaktive Isocyanat- oder Epoxidgruppen enthaltendem Lignin und einem Novolak thermisch aushärten läßt. Wird ein derartiges Gemisch als Bindemittel für Textilfasern verwendet, so läßt sich einerseits die gebräuchliche Produktionstechnik unverändert beibehalten und andererseits werden ausreichende Festigkeiten und Steifigkeiten des Vlieses, wie sie aus der alleinigen Verwendung von Phenolharz bekannt sind, erreicht. Zudem aber bleiben die geruchs- und formaldehydbindenden Eigenschaften erhalten.

Die erfindungsgemäßen Bindemittelgemische enthalten Lignin oder Lignine das/die reaktive(n) Gruppen enthält/enthalten und einen Novolak im Gewichtsverhältnis 95 : 5 bis 50 : 50, bevorzugt im Gewichtsverhältnis 92,5 : 7,5 bis 75 : 25.

Die erfindungsgemäß eingesetzten Lignine enthalten Isocyanat- oder Epoxidgruppen als funktionelle reaktive Gruppen, wobei es theoretisch ausreichend wäre, wenn pro Moleküleinheit des Lignins zwei reaktive Gruppen vorhanden sind. Aus Gründen der Reaktionssicherheit, der Reaktionsgeschwindigkeit und der Festigkeit der Vernetzung ist es jedoch zweckmäßig, wenn die Anzahl der reaktiven Gruppen wesentlich erhöht ist, so daß der prozentuale Anteil der funktionellen Gruppen am durchschnittlichen Molekulargewicht der Lignine 0,5 bis 7,5 % beträgt. Dieser Anteil wird im folgenden als prozentualer Anteil der funktionellen Gruppen bezeichnet.

Isocyanatgruppenhaltige Lignine werden erhalten durch Umsetzung von Hydroxylgruppen oder von Hydroxyalkylgruppen enthaltenden Ligninen mit Diisocyanaten, wie dies z. B. aus J. Appl. Polym. Sci, 29(5), 1831-41 bekannt ist.

Epoxidgruppen enthaltende Lignine sind aus US-A 4 918 167 oder aus US-A 4 265 809 bekannt. Sie werden erhalten durch Umsetzung von Ligninen mit ethylenisch ungesättigten Gruppen oder Hydroxypropylgruppen mit Epichlorhydrin. Bevorzugt eingesetzt werden Lignine mit Epoxidäquivalenten von 500 bis 600.

Es liegt mit im erfindungsgemäßen Bereich, daß als Lignin mit reaktiven Gruppen sowohl ein Lignin-Typ mit einer reaktiven Gruppe als auch ein Lignin-Typ mit mehreren reaktiven Gruppen, etwa Hydroxyl- und Epoxidgruppen, als auch Gemische mehrerer Lignin-Typen mit unterschiedlichen reaktiven Gruppen eingesetzt werden kann.

Novolake sind durch Kondensation in saurem Medium enthaltene Reaktionsprodukte aus einer phenolischen Verbindung und einem Aldehyd, insbesondere aus Phenol und Formaldehyd. Das molare Phenol-Formaldehyd-Verhältnis liegt bevorzugt im Bereich von 1 : 0,7 bis 1 : 0,9.

Die bevorzugten Novolake sind solche mit extrem niedrigem Gehalt an freiem Formaldehyd und freiem Phenol, wie sie z. B. aus Kunststoff-Handbuch 10 - Duroplaste, 2. Auflage, Seite 96 bekannt sind.

Novolak und Lignin liegen in Form feiner Pulver vor, die im gewünschten Gewichtsverhältnis miteinander vermischt werden. Eine derartige Mischung stellt die einfachste Form des erfindungsgemäßen Bindemittelgemisches dar. Darüberhinaus aber kann das Bindemittelgemisch zusätzliche Beschleuniger, wie z. B. Imidazole und/oder Polyamine sowie evtl. geringe Mengen (1 bis 3 % bezogen auf Novolak) an Hexamethylentetramin enthalten.

Für die Herstellung von Faservliesen mit dem erfindungsgemäßen Bindemittelgemisch lassen sich die gebräuchlichen Produktionstechniken einsetzen. Bevorzugt wird die aerodynamische Vliesbildung angewendet. Das vorgeöffnete Fasermaterial wird weiter zerteilt, von einem Luftstrom erfaßt, transportiert und auf einer Lochsiebwalze laufend zum Vlies abgelegt. Das Bindemittelgemisch wird in Pulverform über Walzen, Vibrationsrinnen oder ähnlichen Dosiereinrichtungen in das Vlies eingestreut. In einem nachgeschalteten, geschlossenen System muß durch Verwirbelung für eine intensive und gleichmäßige Verteilung des Bindemittelgemisches im Vliesmaterial gesorgt werden. Anschließend wird das jetzt bindemittelhaltige Fasergut unter Saugwirkung wieder auf den Querschnitt der Faserbahn in einen zwischen Saugwalzen gebildeten Spalt zusammengeführt und erneut zum Vlies abgelegt.

Die Härtung des Bindemittelgemisches und damit die endgültige Verfestigung der Faservliese zum Vliesstoff kann ebenfalls nach verschiedenen Techniken vorgenommen werden. Vorzugsweise wird das Vlies kontinuierlich zwischen zwei Drahtgewebe-Bändern durch einen langen Härtungskanal gefahren, in dem mittels Heißluft von 160 bis 220 °C, die durch das Vlies gesaugt, bzw. geblasen wird, die Aushärtung erfolgt. Dieses Verfahren liefert bahn- und plattenförmige Vliesstoffe.

Eine weitere Möglichkeit zur Verfestigung der Faservliese besteht in der Aushärtung des Bindemittelgemisches durch Heißverpressung, die insbesondere zur Herstellung von stärker verdichteten Platten und Formteilen angewendet wird. Dazu wird das Vlies im Härtungskanal bei wesentlich niedrigeren Temperaturen nur vorgetrocknet und vorgehärtet und das Material anschließend in Heißpressen entsprechend verformt.

### BEISPIELE

Alle nicht näher bezeichneten Mengenangaben sind Angaben in Gewichtsteilen.
MI bedeutet 2-Methylimidazol;
H bedeutet Hexamethylentetramin.

### Beispiel 1

800 g Lignin, hergestellt nach dem Organosolvverfahren, mit CO₂ gefällt, werden bei 150 °C aufgeschmolzen und mit 200 g Bisphenol-A-Epoxidharz (Rütapox® 0164, Epoxidäquivalent = 188, Viskosität bei 25 °C = 9730 mPa·s) vermischt. Unter Zusatz von 3 g Ethyltriphenylphosphoniumbromid läßt man bei 130 °C reagieren, bis das Epoxidäquivalent der Mischung 1880 beträgt. Anschließend wird abgekühlt.
Schmelzpunkt: 110 °C, Viskosität bei 175 °C: 3020 mPa·s.

### Beispiel 2

Analog zu Beispiel 1, jedoch werden als Epoxidharzkomponenten 200 g eines epoxidierten Phenolnovolaks (Epoxidäquivalent = 183, Viskosität bei 80 °C = 1560 mPa·s) eingesetzt. Man läßt reagieren bis das Epoxidäquivalent 1236 beträgt.
Schmelzpunkt: 118 °C, Viskosität bei 175 °C: 6900 mPa·s.

### Beispiel 3

Analog zu Beispiel 1, jedoch werden als Epoxidharzkomponente 150 g Rütapox® 0164 und 50 g Hexandioldiglycidylether eingesetzt. Reaktion bis Epoxidäquivalent 1512 beträgt.
Schmelzpunkt: 98 °C, Viskosität bei 175 °C: 1080 mPa·s.

### Beispiel 4

Analog zu Beispiel 1, jedoch mit folgenden Änderungen:
600 g Lignin, 400 g Epoxidharz (Rütapox® 0164) und Zusatz von 5 g Triphenylphosphin. Endepoxidäquivalent 940. Zur Viskositätseinstellung werden anschließend 100 g Dibutylphthalat zugesetzt.
Schmelzpunkt: 92 °C, Viskosität bei 175 °C: 984 mPa·s.

### Beispiel 5

Analog zu Beispiel 4, jedoch mit folgenden Änderungen:
400 g Lignin, 600 g Epoxidharz (Rütapox® 0164), 100 g Dibutylphthalat. Endepoxidäquivalent 627 (vor Zugabe von Dibutylphthalat.
Schmelzpunkt: 81 °C, Viskosität bei 175 °C, 286 mPa·s.

### Beispiele 6 bis 13

Die modifizierten Lignine aus den Beispielen 1 bis 5 werden mit einem Phenol-Novolak und Beschleuniger vermischt und anschließend auf eine Mahlfeinheit von 8 bis 14 % > 90 µm vermahlen.

Charakterisierung des Novolaks (eingesetzt in allen entsprechenden Beispielen). Molverhältnis Phenol : Formaldehyd 1 : 0,70; Gehalt an freiem Phenol: 0,25 %; Fließstrecke mit 10 % Hexamethylentetramin: 98 mm, B-Zeit (unter Zusatz von 10 % Hexamethylentetramin) bei 150 °C: 1'52''.

Von den erhaltenen Bindemitteln werden die Fließstrecke (nach DIN ISO 8619) und die B-Zeit bei 150 °C nach DIN ISO 8987A bestimmt.

Die erhaltenen Werte befinden sich in der folgenden Tabelle 1:

**TABELLE 1:**

| Beispiel | mod. Lignin aus Beispiel | Menge | Novolak Menge | Beschleuniger | Fließstrecke | B-Zeit |
|---|---|---|---|---|---|---|
| 6 | 1 | 70 | 30 | 1 MI | 18 mm | 1'18'' |
| 7 | 2 | 70 | 30 | 1 MI | 14 mm | 1'12'' |
| 8 | 3 | 90 | 10 | 1 MI | 21 mm | 2'53'' |
| 9 | 3 | 70 | 30 | 1 MI | 29 mm | 1'29'' |
| 10 | 3 | 50 | 50 | 1 MI | 48 mm | 0'53'' |
| 11 | 4 | 70 | 30 | 1 MI | 41 mm | 1'32'' |
| 12 | 5 | 70 | 30 | 2 MI | 31 mm | 0'38'' |
| 13 | 3 | 70 | 30 | 2 H | 39 mm | 2'01'' |

### Beispiel 14

800 g Lignin, gewonnen nach dem Organosolvverfahren, werden mit 200 g Isophorondiisocyanat und 100 g Dibutylphthalat vermischt und bei 85 °C unter Zusatz von 0,5 g Dibutylzinndilaurat (DBTL) bei 80 °C umgesetzt, bis der NCO-Gehalt auf 50 % des ursprünglichen Gehaltes abgefallen ist. Anschließend wird abgekühlt.
Schmelzpunkt: 104,5 °C.

### Beispiel 15

750 g des modifizierten Lignins aus Beispiel 14 werden mit 250 g Phenolnovolak und 2,0 g Hexamethylentetramin vermahlen.
Fließstrecke: 75 mm, B-Zeit bei 150 °C: 4'03''.

### Beispiel 16

600 g eines epoxidendständigen, modifizierten Lignins, hergestellt nach Beispiel 33 der US-A 4 265 809 werden mit 600 g Phenolnovolak und 10 g MI vermischt und vermahlen.
B-Zeit bei 150 °C: 1'35''.

### Beispiel 17 (Vergleichsbeispiel)

Bindemittel bestehend aus Novolak 93,5 Gew.-% und Hexamethylentetramin 6,5 Gew.-%.

### Beispiel 18 (Vergleichsbeispiel)

Bindemittel bestehend aus Novolak, 55 Gew.-%, Phenol-Resol 36 Gew.-% und Melaminharz 9 Gew.-%.

Das Phenol-Resol ist ein wasserfreies alkalisch kondensiertes Phenol-Formaldehyd-Kondensationsprodukt mit einem Phenol-Formaldehyd-Verhältnis von 1 : 2,0 und einem Schmelzpunkt von ca. 98 °C (Sinterpunkt) sowie einem Gehalt an freiem Phenol von ca. 1,5 %. Das Melaminharz ist ein Melamin-Formaldehyld-Kondensationsprodukt mit einem Melamin-Formaldehyd-Verhältnis von 1 : 2,5 und einem Schmelzpunkt von 69 bis 72 °C.

### Beispiel 19 (Vergleichsbeispiel)

Bindemittel bestehend aus Novolak 59 Gew.-%, Epoxidharz 40 Gew.-% und MI 1 Gew.-%.

Das Epoxidharz ist ein handelsübliches Produkt (Rütapox® 0194) auf Basis Bisphenol A mit einem Epoxidäquivalent von 900 bis 1000 g/Äquivalent.

### Beispiel 20

Mit den Bindemitteln der Beispiele 6 bis 13 und 15 bis 19 werden jeweils folgende Mischungen hergestellt:
70 Gew.-Teile Reißbaumwolle und 30 Gew.-Teile Bindemittel.

Aus den Mischungen werden unter Heißverpressung (Beispiele 6 bis 13 und 15 bis 19, Bedingungen: 180 °C, 3 Minuten; Beispiel 15: Bedingungen 170 °C, 5 Minuten) Textilvliesformteile hergestellt.

Es werden Festigkeiten und Verwindungssteifigkeiten miteinander und insbesondere mit dem betriebsmäßigen Standard (Beispiel 17) verglichen.
- Bewertung:: + entspricht dem Standard
- schlechter als Standard

Ferner werden aus den Textilvliesformteilen je 3 Prüfkörper (90 x 200 mm) ausgestanzt und jeweils gemeinsam in verschlossenen 3-Liter-Glasgefäßen, in denen sich 30 ml Wasser befindet, 16 Stunden bei 40 °C gelagert und danach die Gefäße geöffnet und von einem Geruchsteam beurteilt.

Die Geruchsnote (1 = kein Geruch; 2 = nicht störend; 3 = störend; 4 = äußerst störend) wird als relative Beurteilung festgelegt.

Die erhaltenen Ergebnisse finden sich in der folgenden Tabelle 2

**TABELLE 2**

| Textilvlies mit Bindemittel aus | | | | | | | |
|---|---|---|---|---|---|---|---|
| Beispiel | 6 | 7 | 8 | 9 | 10 | 11 | 12 |
| Festigkeit und Steifigkeit | + | + | + | + | + | + | + |
| Geruchsnote | 2,0 | 1,9 | 1,8 | 1,7 | 1,8 | 1,9 | 2,0 |

| Textilvlies mit Bindemittel aus | | | | | | | |
|---|---|---|---|---|---|---|---|
| Beispiel | 13 | 15 | 16 | 17 | 18 | 19 | |
| Festigkeit und Steifigkeit | + | + | + | | - | - | |
| Geruchsnote | 1,8 | 2,0 | 1,9 | 3,5 | 2,0 | 2,3 | |

## Patentansprüche

1. Bindemittelgemisch, enthaltend mindestens ein Lignin mit reaktiven Isocyanat- oder Epoxidgruppen und Novolak im Gewichtsverhältnis 95 : 5 bis 50 : 50.

2. Bindemittelgemisch nach Anspruch 1, **dadurch gekennzeichnet,** daß es Lignin und Phenolnovolak im Gewichtsverhältnis von 92,5 : 7,5 bis 75 : 25 enthält.

3. Bindemittelgemisch nach den Ansprüchen 1 bis 2, **dadurch gekennzeichnet,** daß es zusätzliche Härtungsbeschleuniger enthält.

4. Bindemittelgemisch nach Anspruch 3, **dadurch gekennzeichnet,** daß es als Härtungsbeschleuniger Imidazole und/oder Polyamine enthält.

5. Verwendung des Bindemittelgemisches gemäß der Ansprüche 1 bis 3 zur Herstellung von Textilvlies.

6. Verwendung des Bindemittelgemisches gemäß der Ansprüche 1 bis 3 zur Herstellung von Holzfaserwerkstoffen.

## Claims

1. A binder mixture, containing at least one lignine with reactive isocyanate or epoxy groups and novolak in a weight ratio of from 95 : 5 to 50 : 50.

2. A binder mixture according to claim 1, characterized in that it contains lignin and phenol novolak in a weight ration of from 92.5 : 7.5 to 75 : 25.

3. A binder mixture according to claims 1 to 2, characterized in that it additionally contains hardening accelerators.

4. A binder mixture according to claim 3, characterized in that it contains imidazoles and/or polyamines as hardening accelerators.

5. Use of the binder mixture according to claims 1 to 3 for producing a textile fleece.

6. Use of the binder mixture according to claims 1 to 3 for producing wood-fibre materials.

## Revendications

1. Mélange de liants contenant au moins un type de lignine avec des groupes isocyanates ou époxy réactifs et une novolaque dans le rapport de 95:5 à 50:50.

2. Mélange de liants selon la revendication 1, caractérisé en ce qu'il contient de la lignine et une novolaque de phénol dans le rapport pondéral de 92,5:7,5 à 75:25.

3. Mélange de liants selon les revendications 1 à 2, caractérisé en ce qu'il contient des accéléreurs de durcissement additionnels.

4. Mélange de liants selon la revendication 3, caractérisé en ce qu'il contient, en tant qu'accélérateurs de durcissement, des imidazoles et/ou des polyamines.

5. Utilisation du mélange de liants selon les revendications 1 à 3 pour la fabrication de textiles non tissés.

6. Utilisation du mélange de liants selon les revendications 1 à 3 pour la fabrication de matériaux en fibres de bois.
